# EUROPEAN PATENT APPLICATION

(11) **EP 1 179 765 A2**
(43) Date of publication of application: **13.02.2002**
(21) Application number: 01116346.6
(22) Date of filing: 05.07.2001
(51) Int. Cl.: G06F 3/00

(54) **System for the interaction between the ocular movement of a subject and a personal computer**

(30) Priority: 06.07.2000 IT MO000145
(71) Applicant: UNIVERSITA DI MODENA E REGGIO EMILIA, DIPARTIMENTO DI SCIENZE DELL INGEGNERIA, DIPARTIMENTO DI SCIENZE BIOMEDICHE, 41100 Moden (IT)
(72) Inventor: Fonda, Sergio, I- 41100 Modena (IT); Verzellesi, Giovanni, I-42100 Reggio Emilia (IT)
(74) Representative: Crugnola, Pietro

(57) **Abstract**

An apparatus for the interaction between the ocular movement of a subject and a personal computer (PC), comprises sensor means (1a, 1b, 2a, 2b, 4) for detecting the ocular movements of said subject, filtering and amplifying means (5) for filtering and amplifying signals generated by said sensor means (1a, 1b, 2a, 2b, 4) and coding means (11) for coding said signals, said coding means (11) is suitable for coding said signals according to the USB protocol of a personal computer.

A method for the interaction between the ocular movements of a subject and a personal computer comprises detecting said ocular movements by means of sensor means (1a, 1b, 2a, 2b, 4), filtering and amplifying signals generated by said sensor means (1a, 1b, 2a, 2b, 4), coding said signals; said signals are coded according to the USB protocol of a personal computer.

## Description

The invention relates to a system for the interaction between the ocular movement of a subject and a personal computer, i.e. a system which allows a subject to send commands to a personal computer by using the eye movements.

From US-A-4,109,145 an apparatus is known for determining the direction along which a subject is looking. The apparatus, by using an oculometer, determines the position of the subject's eyes on a reference panel and generates a signal that is sent to a data processing system which interprets the signal for activating control functions of other equipments.

US-A-5,491,492 discloses a method and an apparatus for determining the position of each eye of an operator with respect to a fixed reference point, or the mutual position of the operator's eyes. The apparatus uses electro-oculographic signals generated by the eye movements of the operator. Said signals are detected by means of sensors positioned on the operator face for detecting rightward and leftward, upward and downward movements of the eyes. The signals generated by the sensors are used to control three-dimensional images on a computer, to generate commands for video games or for equipment control, or for measures and diagnosis of strabismus.

US-A-5,276,916 discloses a method and an apparatus for determining the fixation point of a person's glance and the duration thereof by using electro-oculographic measures and data concerning the head movements. The eye movements are detected by means of electrodes positioned near the eyes and the signals generated by the electrodes are amplified, filtered and digitised, and then sent to a computer that uses them, for example, for controlling apparatuses operated by said computer.

In all the above mentioned documents the signals that are sent to the computer are coded according to a coding system specific for the application for which the signals are designed. The computer intended for using said signals has therefore to be provided with hardware components and software specific for interpreting and using the above mentioned signals. This makes the apparatuses described in the above mentioned patents uncomfortable to be used, since they substantially require dedicated computers and can not use computers different from the original one, even in the case of a failure thereof.

An object of the present invention is to provide a system for the interaction between the ocular movement of a subject and a personal computer, that may be easily used with any personal computer of a standard type, without requiring the computer to be provided with specific hardware components and specially developed programs for interfacing the system with the personal computer.

The present invention may be applied to the following sectors: Control of a pointing device on a monitor.

Game systems, such as video games of different types.

Control of domestic functions for handicapped people and/or normal people (turning on the light or controlling household appliances).

System for replacing motor and/or sensory functions for handicapped people.

Interpersonal communicating systems.

Systems for replacing the normal writing functions from keyboard for handicapped persons.

Systems for selecting controls in personalised systems in a working environment (mechanical, electrical, electromechanical, electronic) inside manufacturing systems or for operators of control centres.

Systems for simplifying driving civil, industrial, agricultural, military vehicles.

According to a first aspect of the present invention, an apparatus is provided for the interaction between the ocular movement of a subject and a personal computer, comprising sensor means for detecting the ocular movements of said subject, filtering and amplifying means for filtering and amplifying signals generated by said sensor means and coding means for coding said signals, characterised in that said coding means is suitable for coding said signals according to the USB protocol of a personal computer.

Coding the signals generated by the sensors according to the USB protocol of a personal computer allows the coded signals to be sent to the personal computer through the USB port, actually normally present on any personal computer. In addition, using the coding protocol of the joysticks, the signals concerning the ocular movements are interpreted by the personal computer as movement signals of a joystick and may be managed really simply and effectively by using the basic software for managing a joystick. In other words, a subject using the system according to the invention may send signals to a personal computer using his own eyes as if they were a joystick.

According to a further aspect of the present invention, a method is provided for the interaction between the ocular movements of a subject and a personal computer, comprising detecting said ocular movements by means of sensor means, filtering and amplifying signals generated by said sensors, coding said signals, characterised in that said signals are coded according to the USB protocol of a personal computer.

The invention will be better understood and carried out with reference to the following description and to the attached drawings, that illustrate a purely exemplifying and not restrictive embodiment thereof.

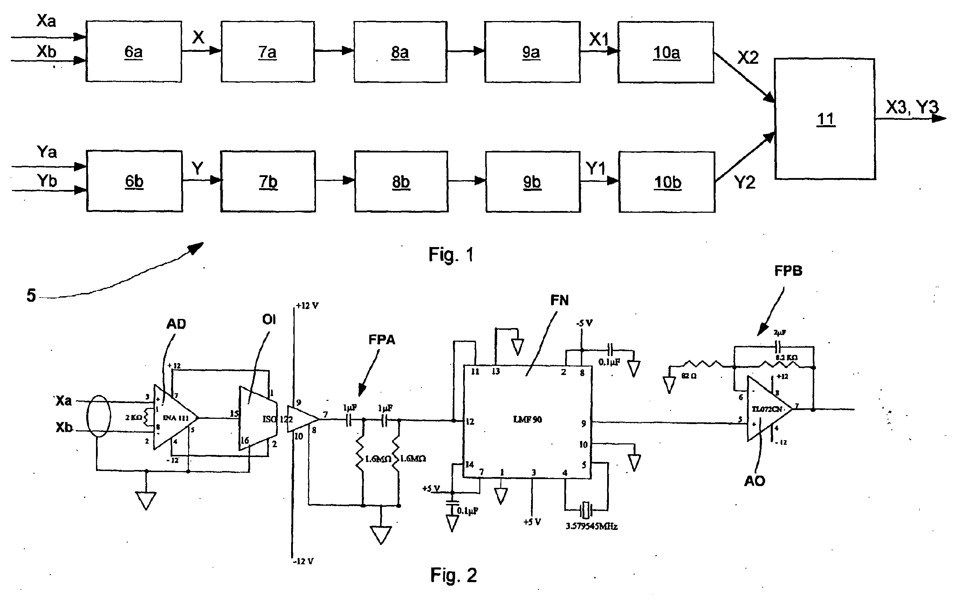

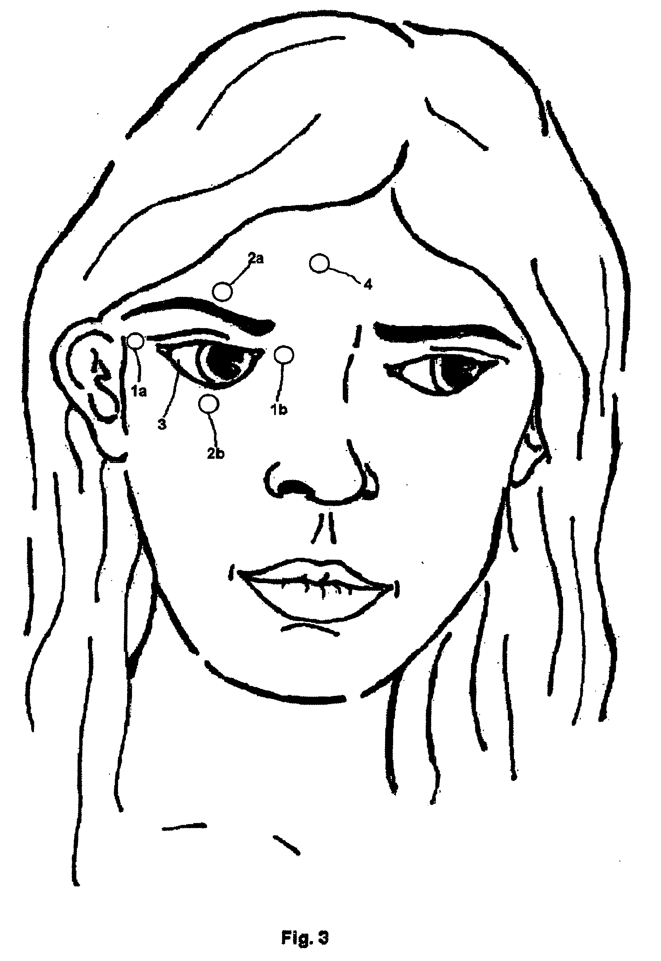

Figure 1 is a block diagram of the system according to the invention;
Figure 2 is an electric diagram of the amplifying circuit for amplifying the electro-oculographic signal;
Figure 3 is a sketched view of the position of electrodes for detecting the electro-oculographic signals on the face of a subject;
Figure 4 is a block diagram showing a different embodiment of the system according to the invention;
Figure 5 is a further block diagram of a system according to the invention;
Figure 6 is a block diagram showing the processing of electro-oculographic signals in the embodiment of the invention of Figure 4;

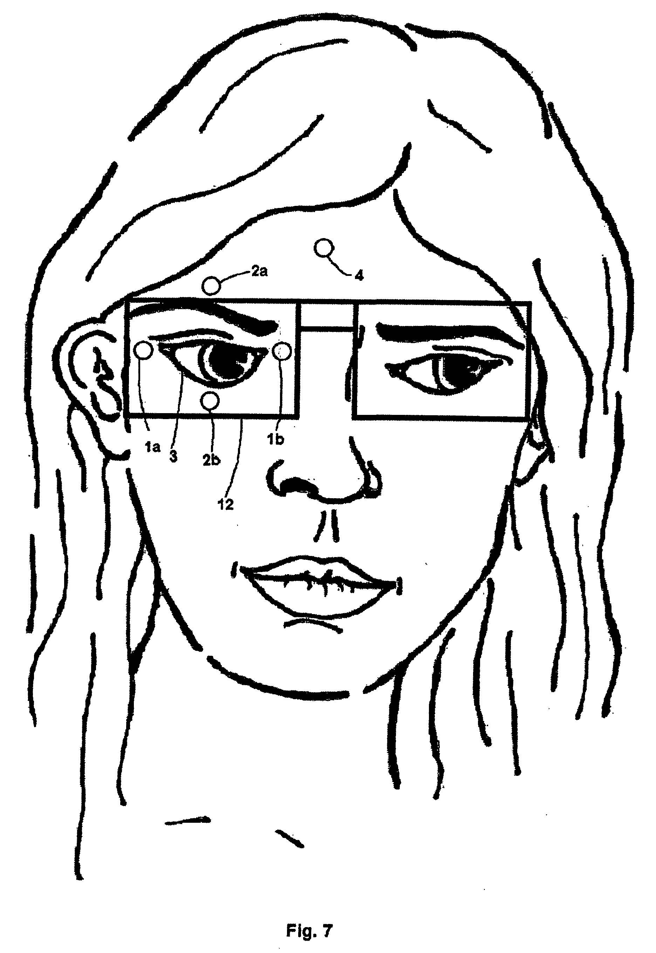

Figure 7 is a view like Figure 3, relating to a further embodiment of the invention, wherein a portable viewer, in the form of glasses, is used.

It is known that the human eye behaves like an electric dipole, since there is a difference in electric potential between the retina, arranged in the rear side of the eye, and the cornea, arranged in the front side of the eye. If a pair of electrodes are positioned near the ocular orbit, a voltage is detected, whose value changes, as the eye moves, proportionally to the angular displacement of the eye.

According to the present invention, it is provided positioning a first pair of electrodes 1a, 1b near the outer and inner corner, respectively, of an eye 3 of the subject and a second pair of electrodes 2a, 2b respectively in the upper periorbital area and in the lower periorbital area of the eye 3. A fifth reference electrode 4, or ground electrode, common to the other electrodes 1a, 1b, 2a, 2b is placed on the head of the subject, for example at its forehead, or in a middle position between the two eyebrows, or attached to the lobe of an ear. In this arrangement the two pairs of electrodes 1a, 1b and 2a, 2b are arranged along two mutually orthogonal axes X-X and Y-Y.

Alternatively, the electrodes 1a and 1b may be arranged at the outer corners of the two eyes of the subject, or at the inner corners of the two eyes. The electrodes 2a and 2b can be arranged respectively at the upper periorbital area of a subject's eye and at the lower periorbital area of the other eye. Generally, the two electrodes 1a, 1b; 2a, 2b of each pair of electrodes have to be arranged so that, when the subject's eyes move, the distance between one of the electrodes of the pair and the cornea of a subject's eye increases, whereas the distance between the other electrode of the pair and the cornea of said eye, or of the other eye, of the subject decreases.

It is advantageous to use electrodes coated with, or consisting of, conducting silicone, which allow a good coupling between the subject's skin and the metal of the electrode to be obtained, minimising the value of the interface potential and requiring no conductive gel to be interposed between the electrode and the skin.

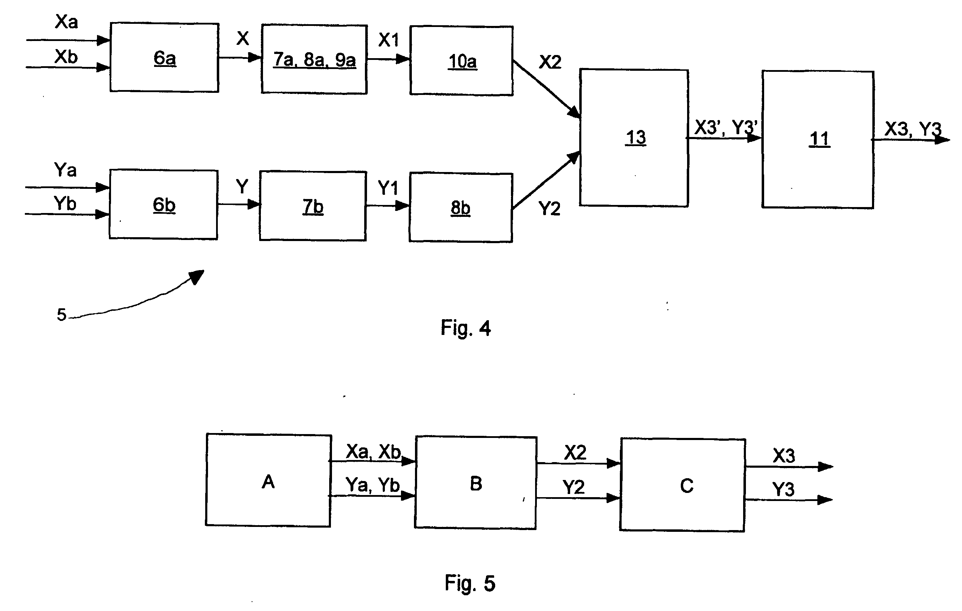

In order to make the electrodes 1a, 1b, 2a, 2b easier to be positioned and to be kept in the proper position on the subject's face, said electrodes are advantageously previously mounted on support means, schematically indicated as A in the block diagram of Figure 5, for example in the form of a mask, shaped so as to adhere to the subject's face and to keep said electrodes in the proper position. Obviously, the dimensions and the shape of the mask have to be adapted to the dimensions and the shape of the subject's face.

Each electrode 1a, 1b, 2a, 2b detects a difference in electric potential, i.e. a voltage, between the point of the subject's face in which the electrode is applied and the point in which the reference electrode 4 is applied. Therefore, the difference between the voltages detected by the first pair of electrodes 1a and 1b is the difference in potential between said electrodes. Similarly as far as the second pair of electrodes 2a and 2b is concerned. When the eye 3 of the subject moves, the difference in potential between the electrodes 1a and 1b changes proportionally to the eye displacement in the direction of X-X axis, whereas the difference in potential between the electrodes 2a and 2b changes proportionally to the eye displacement in the direction of Y-Y axis.

The voltage signals Xa, Xb, Ya, Yb, respectively detected by each electrode 1a, 1b, 2a, 2b are sent to amplifying and processing means 5.

The amplifying and processing means 5 comprises for each pair of said electrodes, first and second amplifying means 6a, 6b, respectively, each comprising a differential amplifier AD (Figure 2), for example an instrumentation differential amplifier with J-FET inputs, the differential amplifier AD having as input signals the voltages detected by the electrodes 1a, 1b, or 2a, 2b of the respective pair of electrodes and as output signal an amplified voltage proportional to the difference in the voltages detected by the two electrodes of the pair. Therefore, the amplifier 6a has as input signals the voltage signals Xa and Xb, coming from the electrodes 1a and 1b, respectively, and has as output signal an amplified voltage X, proportional to Xa-Xb. The amplifier 6b has as input signals the voltage signals Ya and Yb, coming respectively from the electrodes 2a and 2b, and has as output signal an amplified voltage Y, proportional to Ya-Yb.

The differential amplifier AD with J-FET inputs is associated with an opto-isolator device OI, which is needed for insulating the electrodes 1a, 1b; 2a, 2b from the current coming from the outside of the body.

Since the signal coming from the electrodes 1a, 1b, 2a, 2b comprises a continuous voltage component, the gain of the differential amplifier AD has to be chosen so that said continuos component does not produce the saturation of the amplifier output. Typically, the gain of the differential amplifier AD may be chosen, for example, equal to about 20 - 30. The output signal of the first and second amplifying means 6a, 6b is filtered by respective first and second filtering means 7a, 7b, each of which consists of a high pass filter FPA, having a cutoff frequency, for example of 0,1 Hz, that removes said continuous component from the output signal of the differential amplifier AD. Removing the continuous component is necessary for preventing saturation of a following amplifying stage of the amplifying and processing means 5, that will be described later. The signals filtered by the first and second filtering means 7a, 7b are sent to respective third and fourth filtering means 8a, 8b, each of which comprises a switched capacitor filter FN implementing a Notch filter of the fourth order at 50 Hz, removing from the signal the alternating components with frequency of about 50 Hz. These alternating components are generally induced by electromagnetic fields at 50 Hz that are normally present in all the environments where electric equipments or circuits are operating. The signals filtered by the third and fourth filtering means 8a, 8b are sent to fifth and sixth filtering means 9a, 9b, respectively, each of which comprises a low pass filter FPB of the second order. The cutoff frequency of the low pass filter FPB is chosen so as to detect the displacement speed of the subject's eye with enough precision to interact with a graphical interface on a personal computer. This cutoff frequency may be, for example, of 10 Hz. The signals X1 and Y1 filtered by the fifth and sixth filtering means 9a, 9b, are sent to respective third and fourth amplifying means 10a, 10b that further amplify respectively said signals X1 and Y1. Each of the third and fourth amplifying means 10a, 10b comprises a low noise operational amplifier AO. The gain of the third amplifying means 10a is lower than the gain of the fourth amplifying means 10b, since the variation of potential difference between the electrodes 1a, 1b for a specific displacement of the eye 3 in the direction of X-X axis is greater than the variation of potential difference between the electrodes 2a, 2b for an equal displacement of the eye in the direction of Y-Y axis.

For example, the gain of the third amplifying means 10a may be of about 350, whereas the gain of the fourth amplifying means 10b may be of about 700.

The voltage signals X2 and Y2 respectively processed by the third amplifying means 10a and the fourth amplifying means 10b are sent to coder means 11, interfacing with a personal computer, said coder means 11 comprising a micro-controller with USB output protocol. The micro-controller processes the voltage signals X2 and Y2 coming from the second amplifying means 10a and the third amplifying means 10b and converts them into signals X3, Y3, coded according to the USB protocol of a personal computer, which are sent to the USB port of a personal computer. The personal computer interprets the signals X3, Y3 as if they were the movement signals of a joystick connected to the personal computer.

Thus, no hardware specific components or special type components are required to interface the subject with the personal computer and the subject may use the eye movements for sending commands to the computer, as if he was using a joystick. Furthermore, the software for managing the signals sent to the computer is a current type software for managing a joystick.

This allows the person using the system according to the invention to simply and quickly obviate possible failures of the personal computer connected to the system, since any personal computer provided with an USB port, which is, at present, normally mounted on any personal computer, may be used in substitution of the personal computer possibly damaged.

The system may be used, for example, for moving a pointer on a graphical interface on the computer display, for example the normal pointer of the computer mouse, the voltage variations detected by the electrodes 1a, 1b, 2a, 2b and due to the movements of the subject's eyes determining the pointer movements, synchronously with the movements of the subject's eye. For example, an increase in the voltage difference between the electrodes 1a and 1b, corresponding to a rightwards movement of the subject's eye, may cause a corresponding pointer displacement on said graphic interface, whereas a decrease in the voltage difference may cause a leftwards pointer displacement. Similarly, an increase in the voltage difference between the electrodes 2a, 2b, corresponding to an upwards movement of the subject's eye will determine an upwards displacement of the pointer, and vice versa.

A command on the computer display may be selected by keeping the pointer fixed for a pre-established period in a predetermined position, i.e. by keeping the subject's eyes fixed. Alternatively, a command may be selected by means of blinks of the subject's eyelids, which give a distinctive signal, easy to be identified, that may be detected by the electrodes 1a, 1b; 2a, 2b and used for selecting said command.

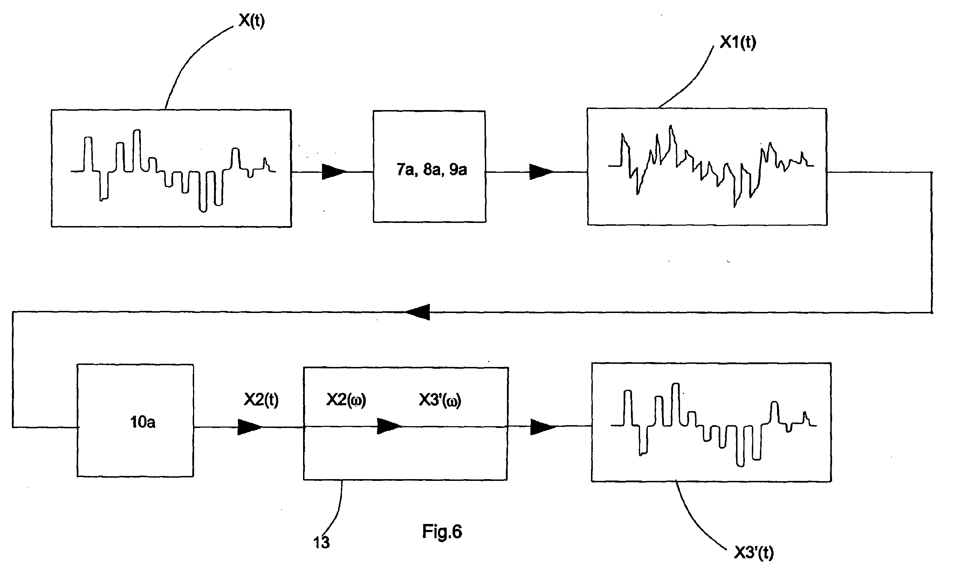

In Figures 4 and 6 a different embodiment of the system according to the invention is shown. In this embodiment, the signals X2 and Y2, respectively processed by the third amplifying means 10a and the fourth amplifying means 10b, before being sent to the coding means 11, are processed by processing means 13, that reconstructs and restores the continuous component of said signals, which was removed by the first and second filtering means 7a, 7b. Said continuous component may be rebuilt and restored, for example, by means of the Fourier transform.

In this case (Figure 6), first of all the Fourier transforms of the functions X2(t) and Y2(t), which represent the time variation of the signals X2 and Y2, are calculated; said transforms X2(ω), Y2(ω), in which ω is the angular frequency of the signals X2, Y2, are then divided by the Fourier transform of the transfer function of the set of the respective filtering means 7a, 8a, 9a; 7b, 8b, 9b. Two functions X3'(ω), Y3'(ω) are thus obtained, from which it is possible to obtain the functions X3'(t), Y3'(t), wherein the continuous component of the signals X and Y, removed by the filtering means, has been restored. The signals X3' and Y3' so obtained are then sent to the coding means 11, to obtain the signals X3, Y3 that are to be sent to the USB port of the personal computer. Restoring the continuous component of the signal is advantageous since this continuous component corresponds to short permanencies of the subject's eyes in a particular position. These short permanencies may be used for sending commands to the personal computer.

The block diagrams of Figure 5 shows that the first and second amplifying means 6a, 6b, the first and second filtering means 7a, 7b, the third and fourth filtering means 8a, 8b, the fifth and sixth filtering means 9a, 9b and the third and fourth amplifying means 10a, 10b may be integrated into a device B, that may be provided with shape and dimensions which allow said device B to be easily carried by the subject using the system according to the invention, for example hanging at the waist. The device B communicates, usually by means of cable connections, with the mask A carrying the electrodes 1a, 1b, 2a and 2b. Furthermore, the device B communicates, by means of cable connection, or by means of radio connection, infrared or ultrasound connection, with the processing means 13 and the coding means 11, schematically indicated as C in the block diagram of Figure 5.

In Figure 6 a further embodiment of the system according to the invention is shown, wherein the monitor of personal computer is replaced by portable viewer means 12, for example in the form of glasses, such as the glasses "Glasstron" sold by SONY, or of the so-called type "head mounted display", in the form substantially of a helmet.

Using the portable viewer means 12 involves the advantage that a fixed alignment between the subject's eyes and the virtual image on the monitor can be kept, avoiding the risk that the movements, even casual, of the subject's head are interpreted by the system as eye movements. This minimises the possibility of errors during the transmission of commands from subject to personal computer.

In the practical embodiment, the materials, dimensions and execution details may be different from those indicated, but technically equivalent thereto, without departing from the legal domain of the present invention.

The abbreviations of the components of the apparatus according to the invention, the values of resistances and capacitances and the circuit details shown in Figure 2 are purely exemplifying and in no way have to be intended as restrictive of the protection domain of the present invention.

## Claims

1. Apparatus for the interaction between the ocular movement of a subject and a personal computer (PC), comprising sensor means (1a, 1b, 2a, 2b, 4) for detecting the ocular movements of said subject, filtering and amplifying means (5) for filtering and amplifying signals (Xa, Xb; Ya, Yb) generated by said sensor means (1a, 1b, 2a, 2b, 4) and coding means (11) for coding said signals, **characterised in that**, said coding means (11) is suitable for coding said signals according to the USB protocol of a personal computer.

2. Apparatus according to claim 1, wherein said sensor means comprises electrodes (1a, 1b, 2a, 2b, 4) applied on the face of said subject.

3. Apparatus according to claim 2, wherein said sensor means (1a, 1b, 2a, 2b, 4) comprises a first pair of electrodes (1a, 1b) applied near corners of the eyes (3) of said subject.

4. Apparatus according to claim 3, wherein said corners are chosen so that, when the eyes (3) of the subject move parallel to a first axis (X-X), the distance between an electrode (1a) of said first pair of electrodes and the cornea of one of said eyes (3) increases, whereas the distance between the other electrode of said first pair of electrodes and the cornea of said one of said eyes or the cornea of the other of said eyes decreases.

5. Apparatus according to any of claims 2 to 4, wherein said sensor means comprises a second pair of electrodes (2a, 2b) respectively applied at the upper periorbital area of one of said eyes (3) and at the lower periorbital area of said one of said eyes (3) or of the other eye (3).

6. Apparatus according to claim 5, wherein said electrodes of said second pair of electrodes (2a, 2b) are aligned along a second axis (Y-Y).

7. Apparatus according to claim 6, wherein said first axis (X-X) and said second axis (Y-Y) are mutually perpendicular.

8. Apparatus according to any of claims 2 to 7, wherein said sensor means (1a, 1b, 2a, 2b, 4) comprises a reference electrode (4).

9. Apparatus according to claim 8, wherein said reference electrode is applied on the forehead or on the lobe of an ear of said subject.

10. Apparatus according to any of claims 1 to 9, wherein said sensor means (1a, 1b, 2a, 2b, 4) is fixed to support means that may be applied to the face of said subject.

11. Apparatus according to claim 10, wherein said support means is in the form of a mask, capable of matching the shape of the face of said subject.

12. Apparatus according to any preceding claim, wherein said amplifying and filtering means (5) comprises first amplifying means (6a) associated with said first pair of electrodes (1a, 1b).

13. Apparatus according to any preceding claim, wherein said amplifying and filtering means (5) comprises second amplifying means (6b) associated with said second pair of electrodes (2a, 2b).

14. Apparatus according to claim 12, wherein said first amplifying means (6a) comprises a differential amplifier (AD) having as input signals voltage signals (Xa, Xb) detected by said first pair of electrodes (1a, 1b).

15. Apparatus according to claim 14, wherein the output signal (X) of said differential amplifier (AD) is proportional to the difference between said voltage signals (Xa, Xb).

16. Apparatus according to claim 14, or 15, wherein said differential amplifier (AD) is an instrumentation amplifier.

17. Apparatus according to any of claims 14 to 16, wherein said differential amplifier is an amplifier with J-FET inputs.

18. Apparatus according to any of claims 14 to 17, wherein said second amplifying means (6b) comprises a differential amplifier (AD) having as input signals voltage signals (Ya, Yb) detected by said second pair of electrodes (2a, 2b).

19. Apparatus according to claim 18, wherein the output signal (Y) of said differential amplifier (AD) is proportional to the difference between said voltage signals (Ya, Yb).

20. Apparatus according to claim 18, or 19, wherein said differential amplifier (AD) is an instrumentation amplifier.

21. Apparatus according to any of claims 18 to 20, wherein said differential amplifier is an amplifier with J-FET inputs.

22. Apparatus according to any of claims 12 to 21, wherein each of said first amplifying means (6a, 6b) comprises an opto-insulator device (IO).

23. Apparatus according to any of claims 12 to 22, wherein said amplifying and filtering means (5) comprises first filtering means (7a) associated with said first amplifying means (6a).

24. Apparatus according to any of claims 12 to 23, wherein said amplifying and filtering means (5) comprises second filtering means (7b) associated with said second amplifying means (6b).

25. Apparatus according to claim 23, or 24, wherein each of said first filtering means (7a) and said second filtering means (7b) comprises a high pass filter (FPA).

26. Apparatus according to any of claims 23 to 25, wherein said first filtering means (7a) is associated with third filtering means (8a).

27. Apparatus according to any of claims 24 to 26, wherein said second filtering means (7b) is associated with fourth filtering means (8b).

28. Apparatus according to claim 26, or 27, wherein each of said third filtering means (8a) and said fourth filtering means (8b) comprises a NOTCH filter at 50 Hz.

29. Apparatus according to any of claims 26 to 28, wherein said third filtering means (8a) is associated with fifth filtering means (9a).

30. Apparatus according to any of claims 27 to 29, wherein said fourth filtering means (8b) is associated with sixth filtering means (9b).

31. Apparatus according to claim 29, or 30, wherein each of said fifth filtering means (9a) and said sixth filtering means (9b) comprises a low pass filter (FPB).

32. Apparatus according to any of claims 29 to 31, wherein said fifth filtering means (9a) is associated with third amplifying means (10a).

33. Apparatus according to any of claims 30 to 32, wherein said sixth filtering means (9b) is associated with fourth amplifying means (10b).

34. Apparatus according to claim 32, or 33, wherein each of said third amplifying means (10a) and said fourth amplifying means (10b) comprises a low noise operational amplifier (AO).

35. Apparatus according to claims 32 and 33, or 34, wherein said third amplifying means (10a) and said fourth amplifying means (10b) are associated with said coding means (11).

36. Apparatus according to claims 32 and 33, or 34, wherein said third amplifying means (10a) and said fourth amplifying means (10b) are associated with processing means (13), suitable for processing signals (X2, Y2) outputted by said third and fourth amplifying means (10a, 10b), for restoring a continuous component of said signals attenuated or removed by said first and second filtering means (7a, 7b).

37. Apparatus according to claims 35 and 36, wherein said processing means (13) is interposed between said third and fourth amplifying means (10a, 10b) and said coding means (11).

38. Apparatus according to claim 35, or 37, wherein said coding means (11) may be associated with a USB port of a personal computer.

39. Apparatus according to any preceding claim, wherein said amplifying and filtering means (5) is integrated into a device (B) having such shape and dimensions as to make said device (B) portable.

40. Apparatus according to claim 39, wherein said device (B) communicates with said processing means (13) and/or said coding means (11) by means of cable connection, or radio wave, infrared ray or ultrasound connection.

41. Apparatus according to any preceding claim, **characterised in that** it further comprises portable viewer means (12) connected to said personal computer.

42. Method for the interaction between the ocular movements of a subject and a personal computer, comprising detecting said ocular movements by means of sensor means (1a, 1b, 2a, 2b, 4), filtering and amplifying signals generated by said sensor means (1a, 1b, 2a, 2b, 4), coding said signals, **characterised in that** said signals are coded according to the USB protocol of a personal computer.

43. Method according to claim 42, wherein said sensor means (1a, 1b, 2a, 2b, 4) comprises first sensor means (1a, 1b) associated with corners of eyes (3) of said subject.

44. Method according to claim 43, wherein said first sensor means comprises a first pair of electrodes (1a, 1b) applied at said corners.

45. Method according to claim 44, wherein said corners are chosen so that, when the eyes (3) of the subject move parallel to a first axis (X-X), the distance between an electrode (1a) of said first pair of electrodes and the cornea of one of said eyes (3) increases, whereas the distance between the other electrode of said first pair of electrodes and the cornea of said one of said eyes or the cornea of the other of said eyes decreases.

46. Method according to any of claims 42 to 45, wherein said sensor means (1a, 1b, 2a, 2b, 4) comprises second sensor means (2a, 2b) associated with the upper periorbital area of one of said eyes (3) and with the lower periorbital area of said eye (3), or of the other eye (3).

47. Method according to claim 46, wherein said second sensor means comprises a second pair of electrodes (2a, 2b) respectively applied at said upper periorbital area and at said lower periorbital area.

48. Method according to claim 47, wherein said electrodes are aligned along a second axis (Y-Y).

49. Method according to claim 48, wherein said second axis (Y-Y) is substantially perpendicular to said first axis (X-X).

50. Method according to any of claims 42 to 49, wherein said sensor means (1a, 1b, 2a, 2b, 4) is associated with support means that may be positioned on the face of said subject.

51. Method according to claim 50, wherein said support means is in the form of a mask, which can be adapted to the shape and the dimensions of the face of said subject.

52. Method according to any of claims 42 to 51, further comprising amplifying the signals (Xa, Xb) generated by said first sensor means (1a, 1b), for generating a first amplified signal (X) proportional to the difference between the signals generated by said first sensor means (1a, 1b).

53. Method according to any of claims 42 to 52, further comprising amplifying the signals (Ya, Yb) generated by said second sensor means (1a, 1b), for generating a second amplified signal (Y) proportional to the difference between the signals generated by said second sensor means (2a, 2b).

54. Method according to claims 52 and 53, further comprising filtering said first amplified signal (X) and said second amplified signal (Y) for attenuating or removing a continuous component of said signals.

55. Method according to claim 54, further comprising further filtering said first amplified signal (X) and said second amplified signal (Y) for attenuating a band of said signals centred on a frequency of 50 Hz.

56. Method according to claim 54, or 55, further comprising still further filtering said first amplified signal (X) and said second amplified signal (Y) for attenuating the components of said signals having frequency greater than a pre-established frequency.

57. Method according to claim 56, wherein said pre-established frequency is of about 10 Hz.

58. Method according to any of claims 54 to 57, further comprising processing said first amplified signal (X) and said second amplified signal (Y) for restoring said continuous component.

59. Method according to any of claims 54 to 58, further comprising coding said first amplified signal (X) and said second amplified signal (Y) according to the USB coding protocol of a personal computer.

60. Method according to any of claims 42 to 59, and further comprising using portable viewer means (12) connected to said personal computer.
